# EUROPEAN PATENT APPLICATION

(11) **EP 2 437 216 A1**
(43) Date of publication of application: **04.04.2012**
(21) Application number: 11183238.2
(22) Date of filing: 29.09.2011
(51) Int. Cl.: G06T 7/00

(54) **Apparatus, method and medium storing program for reconstructing intra-tubular-structure image**

(30) Priority: 01.10.2010 JP 2010223855
(71) Applicant: Fujifilm Corporation, Minato-ku Tokyo (JP)
(72) Inventor: Kitamura, Yoshiro, Tokyo (JP)
(74) Representative: Klunker . Schmitt-Nilson . Hirsch

(57) **Abstract**

A tubular structure (10) , such as a blood vessel, of a subject is extracted from each of a three-dimensional image (V1) representing the tubular structure (10) and a three-dimensional intra-tubular-structure image (V2) that has been generated from plural tomographic images of the tubular structure (10) obtained by performing tomography on the tubular structure (10) plural times from the inside of the tubular structure (10) along a path in the tubular structure (10). Further, an arbitrary range (W1, W2) in one of the tubular structure (10) extracted from the three-dimensional image (V1) and the tubular structure (10) extracted from the three-dimensional intra-tubular-structure image (V2) is correlated with a corresponding range (W1, W2) in the other one of the tubular structures (10). Further, a projection three-dimensional image (V3) is generated by projecting an image of a specific structure included in the range (W2) in the three-dimensional intra-tubular-structure image (V2) into the correlated range (W1) in the three-dimensional image (V1).

## Description

### Field of the Invention

The present invention relates to an apparatus for reconstructing an image of the inside of a tubular structure derived from IntraVascular Ultrasound (IVUS) diagnosis, optical coherence tomography (OCT), or the like. Further, the present invention relates to a method and a program for reconstructing an image of the inside of the tubular structure, and a medium storing the program.

### Description of the Related Art

In recent years, use of a two-dimensional tomographic image of a tubular structure, such as a blood vessel, in image-based diagnosis of the tubular structure was known. The two-dimensional tomographic image is generated based on image signals of the tubular structure obtained by scanning the inside of the tubular structure while rotating a probe attached to a leading end of a catheter in the tubular structure. IntraVascular Ultrasound (IVUS) diagnosis and optical coherence tomography (OCT) technique, which are typical examples, are widely used.

Further, in Intravascular UltraSound (IVUS) diagnosis, a method, such as VH-IVUS (Virtual Histology (Registered Trademark) IntraVascular UltraSound), has been proposed. Unlike conventional IVUS, which displays monochrome images, components are displayed in different colors in the VH-IVUS. Specifically, the tissue composition of plaque is classified into four components, namely, fibrous tissue, fibrofatty tissue, calcified tissue, and necrotic tissue by analyzing ultrasonic high frequency signals to display the components in different colors. These tomographic images of a blood vessel (IVUS image) obtained by IntraVascular UltraSound (IVUS) diagnosis represent the conditions of the lumen of a blood vessel, the wall of the blood vessel and plaque attached to the wall of the blood vessel in detail. Therefore, the IVUS images are useful for evaluation of abnormality in the blood vessel.

Further, the IVUS apparatus has been applied to obtainment of a 3D-IVUS image. Specifically, IVUS images are continuously generated along the path of an ultrasonic probe by scanning the inside of a blood vessel while the ultrasonic probe is rotated in the blood vessel and moved at a constant speed in a longitudinal direction of the blood vessel at the same time. Further, successive IVUS images are stacked one on another to obtain the 3D-IVUS image. Since 3D-IVUS image can make three-dimensional recognition of the distribution and the size of plaque in a blood vessel possible, the 3D- IVUS image attracts attention of users in the field of medical treatment.

For example, Japanese Patent No. 4226904 (Patent Document 1) proposes a technique for generating a 3D-IVUS image. In Patent Document 1, the position and the direction of a leading end of a catheter are obtained at plural timings by an MPS (medical positioning system) sensor arranged at the leading end of the catheter. Further, tomographic images obtained at respective timings are reconstructed based on the obtained positions and the directions of the leading end of the catheter to generate the 3D-IVUS image.

Meanwhile, OCT (Optical Coherence Tomography) obtains a tomographic image (OCT image) of a blood vessel by detecting near-infrared rays output from an optical fiber passing through a catheter. The near-infrared rays are detected through an optical device provided at the leading end of the catheter while the catheter inserted into the blood vessel is rotated. A three-dimensional OCT image is obtainable in a manner similar to obtainment of 3D-IVUS by continuously generating OCT images along the path of the catheter while the catheter is moved at a constant speed in a longitudinal direction of the blood vessel, and by stacking the obtained successive OCT images one on another. Since the OCT image includes ultra-high resolution data, and the resolution of which is higher than that of the IVUS image, the OCT image is highly valuable in the field of medical treatment.

However, in a 3D-IVUS image, or a three-dimensional image generated by stacking OCT images one on another, the path of movement of an ultrasonic probe is used as a center line, and tomographic images of a blood vessel are stacked one on another along the center line. Therefore, the morphology (shape) of the blood vessel represented by the 3D-IVUS image or the three-dimensional image is different from the morphology of the real blood vessel. Therefore, doctors and the like need to separately prepare a comparative image, such as a contrast enhanced image of a blood vessel, which was imaged after injection of a contrast medium. Further, the 3D-IVUS image or the three-dimensional image, which has been generated by stacking OCT images one on another, needs to be compared with the comparative image to estimate a position in the blood vessel represented by the generated 3D-IVUS image or three-dimensional image during image reading. Therefore, it has been difficult to recognize a correspondence between the position of the blood vessel in the 3D-IVUS image represented in a coordinate system along the center line of the blood vessel and the position of the blood vessel in real three-dimensional space.

The aforementioned problems are not solved by the method disclosed in Patent Document 1. Further, since the method disclosed in Patent Document 1 requires hardware, such as an MPS sensor and an system for analyzing signal values of the MPS sensor, it is not easy to adopt the method disclosed in Patent Document 1.

### SUMMARY OF THE INVENTION

In view of the foregoing circumstances, it is an object of the present invention to provide an apparatus, a method and a program for reconstructing an image of the inside of a tubular structure that can make it possible to easily and intuitionally recognize, based on the morphology of the tubular structure in real space, a three-dimensional tomographic image of the inside of a tubular structure represented in a coordinate system along a center line of the tubular structure.

An apparatus for reconstructing an image of the inside of a tubular structure according to the present invention is an apparatus for reconstructing an image of the inside of a tubular structure, the apparatus comprising:
a three-dimensional image obtainment means that obtains a three-dimensional image representing a tubular structure of a subject;
a three-dimensional intra-tubular-structure image obtainment means that obtains a three-dimensional intra-tubular-structure image, which is a three-dimensional image of the inside of the tubular structure that has been generated from a plurality of tomographic images of the tubular structure obtained by performing tomography on the tubular structure a plurality of times from the inside of the tubular structure along a path in the tubular structure;
a structure extraction means that extracts the tubular structure from each of the obtained three-dimensional image and the obtained three-dimensional intra-tubular-structure image;
a correlating means that correlates an arbitrary range in one of the tubular structure extracted from the three-dimensional image and the tubular structure extracted from the three-dimensional intra-tubular-structure image with a corresponding range in the other one of the tubular structures; and
a projection three-dimensional image generation means that generates a projection three-dimensional image by projecting an image of a specific structure included in the range in the three-dimensional intra-tubular-structure image into the correlated range in the three-dimensional image.

A method for reconstructing an image of the inside of a tubular structure according to the present invention is a method for reconstructing an image of the inside of a tubular structure, the method comprising the steps of:
obtaining a three-dimensional image representing a tubular structure of a subject;
obtaining a three-dimensional intra-tubular-structure image, which is a three-dimensional image of the inside of the tubular structure that has been generated from a plurality of tomographic images of the tubular structure obtained by performing tomography on the tubular structure a plurality of times from the inside of the tubular structure along a path in the tubular structure;
extracting the tubular structure from each of the obtained three-dimensional image and the obtained three-dimensional intra-tubular-structure image;
correlating an arbitrary range in one of the tubular structure extracted from the three-dimensional image and the tubular structure extracted from the three-dimensional intra-tubular-structure image with a corresponding range in the other one of the tubular structures; and
generating a projection three-dimensional image by projecting an image of a specific structure included in the range in the three-dimensional intra-tubular-structure image into the correlated range in the three-dimensional image.

A program for reconstructing an image of the inside of a tubular structure according to the present invention is a program causing a computer to function as:
a three-dimensional image obtainment means that obtains a three-dimensional image representing a tubular structure of a subject;
a three-dimensional intra-tubular-structure image obtainment means that obtains a three-dimensional intra-tubular- structure image, which is a three-dimensional image of the inside of the tubular structure that has been generated from a plurality of tomographic images of the tubular structure obtained by performing tomography on the tubular structure a plurality of times from the inside of the tubular structure along a path in the tubular structure;
a structure extraction means that extracts the tubular structure from each of the obtained three-dimensional image and the obtained three-dimensional intra-tubular-structure image;
a correlating means that correlates an arbitrary range in one of the tubular structure extracted from the three-dimensional image and the tubular structure extracted from the three-dimensional intra-tubular-structure image with a corresponding range in the other one of the tubular structures; and
a projection three-dimensional image generation means that generates a projection three-dimensional image by projecting an image of a specific structure included in the range in the three-dimensional intra-tubular-structure image into the correlated range in the three-dimensional image.

A non-transitory computer-readable medium or a medium according to the present invention stores therein a program for reconstructing an image of the inside of a tubular structure, the program causing a computer to function as:
a three-dimensional image obtainment means that obtains a three-dimensional image representing a tubular structure of a subject;
a three-dimensional intra-tubular-structure image obtainment means that obtains a three-dimensional intra-tubular-structure image, which is a three-dimensional image of the inside of the tubular structure that has been generated from a plurality of tomographic images of the tubular structure obtained by performing tomography on the tubular structure a plurality of times from the inside of the tubular structure along a path in the tubular structure;
a structure extraction means that extracts the tubular structure from each of the obtained three-dimensional image and the obtained three-dimensional intra-tubular-structure image;
a correlating means that correlates an arbitrary range in one of the tubular structure extracted from the three-dimensional image and the tubular structure extracted from the three-dimensional intra-tubular-structure image with a corresponding range in the other one of the tubular structures; and
a projection three-dimensional image generation means that generates a projection three-dimensional image by projecting an image of a specific structure included in the range in the three-dimensional intra-tubular-structure image into the correlated range in the three-dimensional image.

Here, the "tubular structure" in the present invention may be any structure as long as a three-dimensional image of the inside of the tubular structure is obtainable. A typical example of the tubular structure is a blood vessel. Further, the "specific structure included in the range" may be any structure as long as the structure is included in the range. The specific structure may be the tubular structure and/or a structure present in the tubular structure. Alternatively, the specific structure may be present outside the tubular structure. Alternatively, the specific structure may have the tubular structure in the inside thereof. For example, when the tubular structure is a blood vessel, a structure present in the blood vessel includes soft plaque and hard plaque. Further, the structure present in the blood vessel includes a lumen region of the blood vessel, which is a blood vessel region excluding a plaque region, such as soft plaque and hard plaque. Further, each of fibrous tissue, fibrofatty tissue, calcified tissue, necrotic tissue, and the like, which constitute the plaque, may be regarded as a structure present in the blood vessel.

Further, the expression "projecting an image of a specific structure included in the range in the three-dimensional intra-tubular-structure image" means that an image of at least one structure included in the range should be projected. For example, an image of a structure extracted from the range by using a known method may be projected. Alternatively, images of all of specific structures included in the range may be projected by projecting voxel values (pixel values) of all voxels (pixels) constituting the range. Further, a whole image of a specific structure may be projected to generate a projection three-dimensional image. Alternatively, apart of the image of the specific structure may be projected to generate a projection three-dimensional image. For example, voxel values of all of voxels constituting the specific structure may be projected. Alternatively, voxel values of a part of voxels constituting the specific structure may be projected, or only the outline of the specific structure may be projected.

The three-dimensional image in the present invention should be a three-dimensional image representing the morphology of a tubular structure. For example, the three-dimensional image is generated based on a CT image or an MRI image.

In the apparatus for reconstructing an image of the inside of a tubular structure according to the present invention, it is desirable that the correlating means correlates the arbitrary range in one of the tubular structure extracted from the three-dimensional image and the tubular structure extracted from the three-dimensional intra-tubular-structure image with the corresponding range in the other one of the tubular structures based on a path in the tubular structure in the three-dimensional image and the path in the tubular structure in the three-dimensional intra-tubular-structure image.

The three-dimensional intra-tubular-structure image obtainment means may obtain various kinds of image as long as the image is a three-dimensional intra-tubular-structure image generated from tomographic images obtained by imaging along a path passing through the inside of the tubular structure. For example, the three-dimensional intra-tubular-structure image obtainment means may obtain a three-dimensional intravascular ultrasonic image (3D-IVUS image). Alternatively, the three-dimensional intra-tubular-structure image obtainment means may obtain a three-dimensional intravascular ultrasonic image, such as Virtual Histology (Registered Trademark) IVUS image, including data obtained by performing spectrum analysis on RF (radio frequency) signals obtained by IVUS. Alternatively, the three-dimensional intra-tubular-structure image obtainment means may obtain a three-dimensional optical coherence tomographic image. The term "three-dimensional optical coherence tomographic image" means a three-dimensional image obtained by stacking optical coherence tomographic images (OCT images) one on another along a path in the tubular structure.

In the three-dimensional intra-tubular structure image, the "path" is a path through which an imaging device for imaging the inside of the tubular structure moves in the tubular structure. For example, in IVUS, the "path" corresponds to a path of movement of an ultrasonic probe attached to the leading end of a catheter in a blood vessel. In OCT, the "path" corresponds to a path of movement of an optical device attached to the leading end of a catheter in the blood vessel. Meanwhile, in the three-dimensional image, the "path" may be any path as long as the line of the path passes through the inside of the tubular structure in the longitudinal direction of the tubular structure. For example, the center line of a blood vessel may be used as the path in the three-dimensional image.

In the apparatus for reconstructing an image of the inside of a tubular structure of the present invention, it is desirable that the structure extraction means further extracts the position of a branching portion or an uneven portion in the tubular structure from each of the three-dimensional image and the three-dimensional intra-tubular-structure image. Further, it is desirable that the correlating means correlates the arbitrary range in one of the tubular structure extracted from the three-dimensional image and the tubular structure extracted from the three-dimensional intra-tubular-structure image with the corresponding range in the other one of the tubular structures in such a manner that the positions of the branching portions or the uneven portions extracted from the three-dimensional image and the three-dimensional intra-tubular-structure image coincide with each other in a longitudinal direction of the tubular structure. Further, it is desirable that the correlating means correlates positions in the tubular structure in a circumferential direction of the tubular structure in the three-dimensional image and positions in the tubular structure in a circumferential direction of the tubular structure in the three-dimensional intra-tubular-structure image with each other in such a manner that the positions of the branching portions or the even portions extracted from the three-dimensional image and the three-dimensional intra-tubular-structure image coincide with each other in the circumferential directions of the tubular structures.

The uneven portion in the tubular structure is a protuberance (protruding portion) or a hollow (depression) on the inner surface of the tubular structure. For example, the uneven portion in the tubular structure is a protruding portion, such as plaque present in a blood vessel.

In the apparatus for reconstructing an image of the inside of a tubular structure, the structure extraction means may measure a radius of the tubular structure at at least one position along a longitudinal direction of the tubular structure in each of the three-dimensional image and the three-dimensional intra-tubular-structure image. Further, the correlating means may correlate the arbitrary range in one of the tubular structure extracted from the three-dimensional image and the tubular structure extracted from the three-dimensional intra-tubular-structure image and the corresponding range in the other one of the tubular structures with each other in such a manner that a position in the three-dimensional image and a position in the three-dimensional intra-tubular-structure image at which the tubular structures have the same measured radii coincide with each other.

According to the apparatus, the method and the program for reconstructing an image of the inside of a tubular structure according to the present invention, a tubular structure of a subject is extracted from each of a three-dimensional image representing the tubular structure and a three-dimensional intra-tubular-structure image. Further, an arbitrary range in one of the tubular structure extracted from the three-dimensional image and the tubular structure extracted from the three-dimensional intra-tubular-structure image is correlated with a corresponding range in the other one of the tubular structures. Further, a projection three-dimensional image is generated by projecting an image of a specific structure included in the range in the three-dimensional intra-tubular-structure image into the correlated range in the three-dimensional image. Accordingly, it is possible to generate a projection three-dimensional image in which an image of a specific structure in the three-dimensional intra-tubular-structure is projected in such a manner to conform to the morphology of the tubular structure in real space. Therefore, it is possible to easily recognize the image of the specific structure included in the three-dimensional intra-tubular-structure image based on the projection three-dimensional image.

Further, in the apparatus for reconstructing an image of the inside of a tubular structure according to the present invention, when the structure extraction means further extracts the position of a branching portion or an uneven portion in the tubular structure from each of the three-dimensional image and the three-dimensional intra-tubular-structure image, and the correlating means correlates the arbitrary range in one of the tubular structure extracted from the three-dimensional image and the tubular structure extracted from the three-dimensional intra-tubular-structure image with the corresponding range in the other one of the tubular structures in such a manner that the positions of the branching portions or the uneven portions extracted from the three-dimensional image and the three-dimensional intra-tubular-structure image coincide with each other in a longitudinal direction of the tubular structure, it is possible to correct an error (difference) in the longitudinal direction of the tubular structure along the center line of the tubular structure. Therefore, it is possible to more accurately generate a projection three-dimensional image in which an image of a specific structure included in the three-dimensional intra-tubular-structure represented in a coordinate system along the center line of the tubular structure is projected in such a manner to conform to the morphology of the tubular structure in real space.

Further, when the correlating means correlates positions in the tubular structure in a circumferential direction of the tubular structure in the three-dimensional image and positions in the tubular structure in a circumferential direction of the tubular structure in the three-dimensional intra-tubular-structure image with each other in such a manner that the positions of the branching portions or the uneven portions extracted from the three-dimensional image and the three-dimensional intra-tubular-structure image coincide with each other in the circumferential directions of the tubular structures, it is possible to correct an error in the circumferential direction of the tubular structure with respect to the center line of the tubular structure as a center axis. Therefore, it is possible to more accurately generate a projection three-dimensional image in which an image of a specific structure included in the three-dimensional intra-tubular-structure represented in the coordinate system along the center line of the tubular structure is projected in such a manner to conform to the morphology of the tubular structure in real space.

Further, in the apparatus for reconstructing an image of the inside of a tubular structure of the present invention, when the structure extraction means measures a radius of the tubular structure at at least one position along a longitudinal direction of the tubular structure in each of the three-dimensional image and the three-dimensional intra-tubular-structure image, and the correlating means correlates the arbitrary range in one of the tubular structure extracted from the three-dimensional image and the tubular structure extracted from the three-dimensional intra-tubular-structure image and the corresponding range in the other one of the tubular structures with each other in such a manner that a position in the three-dimensional image and a position in the three-dimensional intra-tubular-structure image at which the tubular structures have the same measured radii coincide with each other, it is possible to correct an error in the longitudinal direction of the tubular structure along the center line of the tubular structure. Therefore, it is possible to more accurately generate a projection three-dimensional image in which an image of a specific structure included in the three-dimensional intra-tubular-structure represented in the coordinate system along the center line of the tubular structure is projected in such a manner to conform to the morphology of the tubular structure in real space.

Note that the program of the present invention may be provided being recorded on a computer readable medium. Those who are skilled in the art would know that computer readable media are not limited to any specific type of device, and include, but are not limited to: floppy disks, CD's RAM'S, ROM's, hard disks, magnetic tapes, and internet downloads, in which computer instructions can be stored and/or transmitted. Transmission of the computer instructions through a network or through wireless transmission means is also within the scope of this invention. Additionally, computer instructions include, but are not limited to: source, object and executable code, and can be in any language including higher level languages, assembly language, and machine language.

### BRIEF DESCRIPTION OF THE DRAWINGS

Figure 1 is a schematic diagram illustrating the configuration of an apparatus for reconstructing an image of the inside of a tubular structure according to an embodiment of the present invention;
Figure 2 is a flow chart of processing by the apparatus for reconstructing an image of the inside of a tubular structure according to an embodiment of the present invention;
Figure 3 is a diagram illustrating an example of a cardiac region extracted by a structure extraction means;
Figure 4 is a diagram illustrating an example of candidate points detected by the structure extraction means;
Figure 5 is a diagram illustrating an example of a tree structure constructed by connecting extracted candidate points;
Figures 6a, 6b are diagrams for explaining a process of correlating a three-dimensional image and a three-dimensional intra-tubular-structure image with each other along paths;
Figures 7a, 7b are diagrams for explaining a process of correlating a three-dimensional image and a three-dimensional intra-tubular-structure image with each other in circumferential directions (start points of paths);
Figures 8Aa, 8Ab are diagrams for explaining a process of correlating a three-dimensional image and a three-dimensional intra-tubular-structure image with each other in circumferential directions (branching portions in the paths);
Figures 8Ba, 8Bb are diagrams for explaining a process of correlating a three-dimensional image and a three-dimensional intra-tubular-structure image with each other in circumferential directions (other branching portions in the paths);
Figures 8Ca, 8Cb are diagrams for explaining another example of a process of correlating a three-dimensional image and a three-dimensional intra-tubular-structure image with each other in circumferential directions (branching portions in the paths);
Figures 9Aa, 9Ab are diagrams for explaining a process of correlating a three-dimensional image and a three-dimensional intra-tubular-structure image with each other in circumferential directions (plaque portions in the paths);
Figures 9Ba, 9Bb are diagrams for explaining another example of a process of correlating a three-dimensional image and a three-dimensional intra-tubular- structure image with each other in circumferential directions (plaque portions in the paths);
Figures 10a, 10b are diagrams for explaining a process of correlating a three-dimensional image and a three-dimensional intra-tubular-structure image with each other along paths in a modified example of the first embodiment of the present invention:
Figure 11A is a diagram illustrating an example of a displayed reconstruction image obtained in the first embodiment; and
Figure 11B is a partially enlarged diagram of region 10A illustrated in Figure 11A.

### DESCRIPTION OF THE PREFERRED EMBODIMENTS

Hereinafter, embodiments of an apparatus, a method and a program for reconstructing an image of the inside of a tubular structure according to the present invention will be described in detail with reference to drawings.

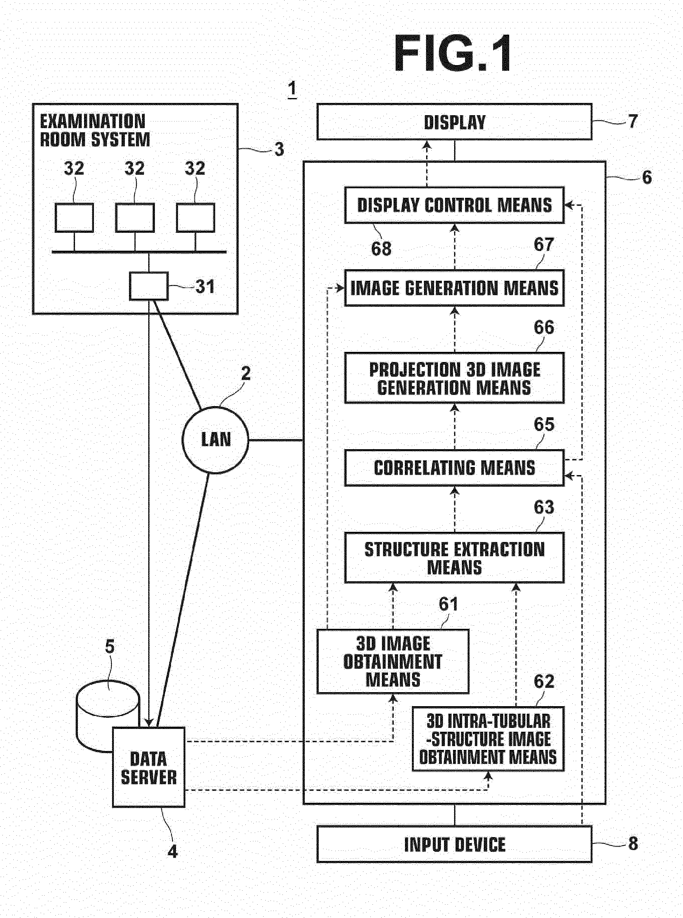

Figure 1 is a schematic diagram illustrating the configuration of a hospital system 1 including an apparatus 6 for reconstructing an image of the inside of a tubular structure (an intra-tubular-structure image reconstruction apparatus) according to an embodiment of the present invention. The hospital system 1 includes an examination room system 3, a data server 4 and a workstation (WS) 6 for diagnosis, which are connected to each other through a local area network (LAN) 2.

The examination room system 3 includes various kinds of modality 32 for imaging a patient to be examined and an examination room workstation (WS) 31 for checking and adjusting images output from each of the modalities 32 . An IVUS apparatus and a CT (Computed Tomography) apparatus, which can obtain a morphological image representing morphological data about a blood vessel, are provided as the modalities 32. Further, an OCT apparatus, an MRI (Magnetic Resonance Imaging) apparatus, a PET (Positron Emission Tomography) apparatus, and the like are provided as the modalities 32. All of the modalities 32 are based on DICOM (Digital Imaging and Communication in Medicine) standard. The modalities attach supplementary data to obtained volume data, and output the volume data as a DICOM file.

A file output from each of the modalities 32 is transferred to the data server 4 by the examination room workstation (WS) 31. The data server 4 is a relatively high processing performance computer including a high performance processor and a large capacity memory, and in which a software program for providing a function of a database management server (DBMS: Database Management Server) has been installed (mounted) . The program is stored in a storage, and loaded in a memory during booting. Further, the program is executed by a processor. The data server 4 stores the file transferred from the examination room WS 31 in a large capacity storage 5. Further, the data server 4 selects, based on a retrieval request from the workstation (WS) 6 for diagnosis, a file satisfying a retrieval condition from plural files stored in the large capacity storage 5. Further, the data server 4 sends the selected file to the WS 6 for diagnosis.

The WS 6 for diagnosis is a general-purpose workstation including a standard processor, a memory and a storage. Further, a program for reconstructing an image of the inside of a tubular structure has been installed in the WS 6 for diagnosis to support doctors in diagnosis on patients. The program for reconstructing an image of the inside of a tubular structure is installed in the WS 6 for diagnosis from a recording medium, such as a DVD, or by being downloaded from a server computer in a network. Further, a display 7 and an input device 8, such as a mouse and a keyboard, are connected to the WS 6 for diagnosis.

The program for reconstructing an image of the inside of a tubular structure, which is installed in the WS 6 for diagnosis, is composed of program module groups for achieving various functions. One of the program module groups is a program module group for achieving a function for reconstructing an image of the inside of a tubular structure. These program module groups are stored in the storage, and loaded in the memory during booting. Further, the program module groups are executed by the processor. Accordingly, the WS 6 for diagnosis acts as a three-dimensional image obtainment means 61, a three-dimensional intra-tubular-structure image obtainment means 62, a structure extraction means 63, a correlating means 65, a projection three-dimensional image generation means 66, an image generation means 67, and a display control means 68, as illustrated in Figure 1. The three-dimensional image obtainment means 61 obtains a three-dimensional image representing a tubular structure of a subject. The three-dimensional intra-tubular-structure image obtainment means 62 obtains a three-dimensional intra-tubular-structure image (a three-dimensional image of the inside of the tubular structure) that has been generated from plural tomographic images of the tubular structure obtained by performing tomography on the tubular structure plural times from the inside of the tubular structure along a path in the tubular structure. The structure extraction means 63 extracts the tubular structure from each of the obtained three-dimensional image and the obtained three-dimensional intra-tubular-structure image. The correlating means 65 correlates arbitrary range W1 (W2) in one of the tubular structure in the three-dimensional image V1 and the tubular structure in the three-dimensional intra-tubular-structure image V2 with corresponding range W2 (W1) in the other one of the structures. The projection three-dimensional image generation means 66 generates projection three-dimensional image V3 by projecting an image of a specific structure included in the range W2 in the three-dimensional intra-tubular-structure image V2 into the range W1 in the three-dimensional image V1 correlated by the correlating means 65. The image generation means 67 generates an image by reconstructing the projection three-dimensional image, and the display control means 68 makes a display device display the reconstructed image.

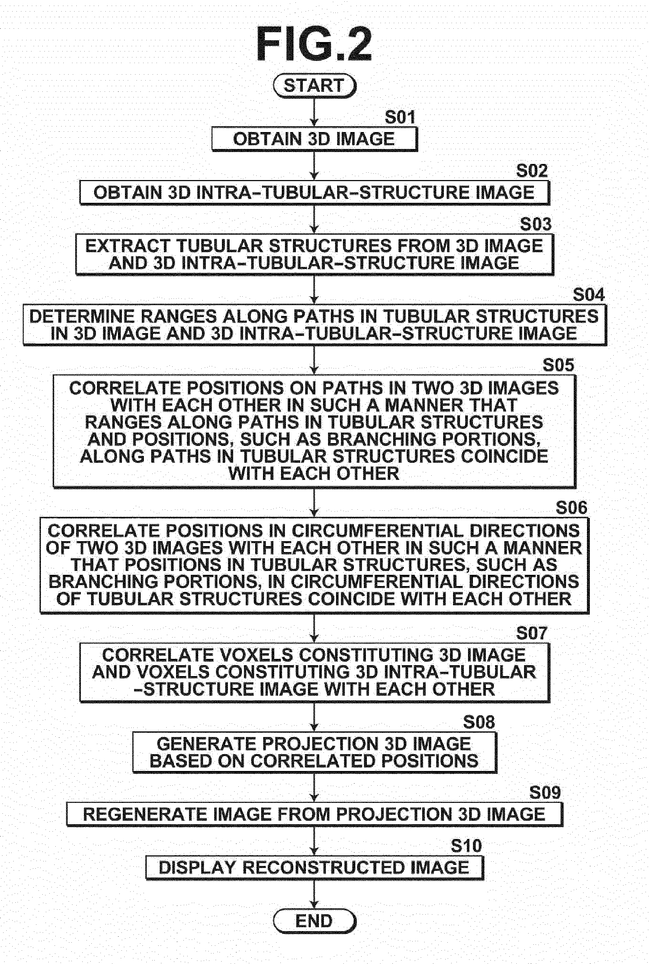

Figure 2 is a flow chart of processing for generating an image of the inside of a tubular structure according to the present embodiment. The flow of processing of each function of WS 6 for diagnosis (an apparatus for generating an image of the inside of a tubular structure) in the present embodiment will be described in detail with reference to Figure 2. In the present embodiment, examination of the heart will be used as an example, and a case in which the tubular structure is a blood vessel, especially, the coronary artery will be described.

In examination of the heart, the chest of a patient (subject) is imaged by using a CT apparatus or the like to obtain volume data about the heart before the processing in the present embodiment is performed. Further, supplementary information is attached to the volume data. The volume data to which the supplementary information is attached are transferred, as a DICOM file, to the data server 4, and stored in the large capacity storage 5. The volume data are composed of a multiplicity of sets of voxel data representing the distribution of intensities and densities in three-dimensional space. An absorption amount of X-rays or the like is represented as a voxel value in each voxel data.

First, a function for reconstructing an image of the inside of a tubular structure of the heart is selected at an opening screen. When an identification number of a patient, an examination number, or the like is input at a predetermined input screen, the three-dimensional image obtainment means 61 sends the input data to the data server 4, and requests retrieval and transfer of a file stored in the large capacity storage 5.

When the data server 4 receives the request, the data server 4 retrieves the file from the large capacity storage 5, and transfers the requested file to the three-dimensional image obtainment means 61. The three-dimensional image obtainment means 61 stores, in a memory, three-dimensional image V1 included in the file transferred from the data server 4 (step S01).

Further, the three-dimensional intra-tubular-structure image obtainment means 62 obtains 3D-IVUS image V2, which is a three-dimensional intra-tubular-structure image included in the file transferred from the data server 4, and stores the 3D-IVUS image V2 in a memory (step S02). The three-dimensional intra-tubular-structure image is a three-dimensional image of the inside of the tubular structure that has been generated from plural tomographic images of the tubular structure obtained by performing tomography on the tubular structure plural times from the inside of the tubular structure along a path in the tubular structure. In the present embodiment, 3D-IVUS image V2 is obtained as the three-dimensional intra-tubular-structure image. The 3D-IVUS image V2 is obtained by obtaining intravascular ultrasonic images (IVUS images) plural times along path B in a blood vessel.

Then, the structure extraction means 63 extracts tubular structure regions 10 from each of the three-dimensional image V1 and the 3D-IVUS image V2 stored in the memory through the aforementioned processing. The tubular structure region 10, which is a region corresponding to the wall of the coronary artery and the lumen of the coronary artery, is extracted. Accordingly, the structure extraction means 63 obtains three-dimensional structure extraction data (step S03). Further, in the process of extracting the coronary artery regions from the images V1 and V2, the center lines of the coronary arteries, which are paths in the coronary arteries, are identified in the images V1 and V2. Hereinafter, the center line of the tubular structure extracted from the three-dimensional image V1 will be referred to as path A, and the path of a probe in a blood vessel in the 3D-IVUS image V2 will be referred to as path B.

In the processing for extracting a structure according to the present embodiment, methods proposed in Unexamined Japanese Patent Application No. 2009-048679 and Unexamined Japanese Patent Application No. 2009-069895, which were filed by FUJIFILM Corporation, are adopted. Next, the processing disclosed in these patent documents will be outlined. When a tubular structure is a bloodvessel, various methods for extracting a coronary artery region from volume data, such as a method described in "Andrzej Szymczak, et al., Coronary vessel tree frin 3D imagery: A topological approach, Medical Image Analysis, 2006", were proposed. Any kind of known method that can extract a tubular structure may be adopted to extract a region.

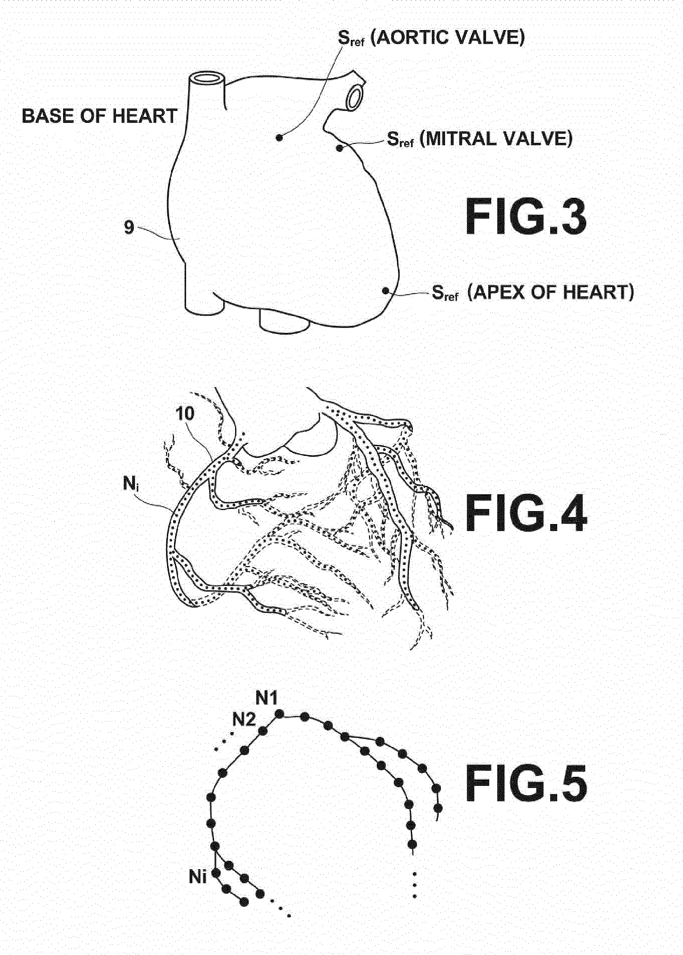

The structure extraction means 63 extracts, based on predetermined algorithm, a region (hereinafter, referred to as a cardiac region) corresponding to the heart from volume data. Figure 3 illustrates a cardiac region 9 extracted by the structure extraction means 63.

Next, the structure extraction means 63 sets, as a search range, a rectangular parallelepiped region including the cardiac region 9 in the volume data. Further, the structure extraction means 63 searches, based on predetermined algorithm, the search range for a tubular structure. Further, the structure extraction means 63 detects, based on the tubular structure detected by searching, points that are estimated to be points on a core line of the coronary artery. In the following descriptions, points that are estimated to be points on a path in the coronary artery are referred to as candidate points or nodes. Figure 4 is a diagram illustrating an extracted tubular structure region 10 in the three-dimensional structure extraction data and detected candidate points Nᵢ.

Search for a tubular structure is performed by calculating eigenvalues in 3x3 Hessian matrix for each local region in the search range. When a local region includes a tubular structure, one of three eigenvalues of Hessian matrix is close to zero, and the other two eigenvalues are relatively large. Further, an eigenvector corresponding to the eigenvalue close to zero indicates the principal axial direction of the tubular structure. The structure extraction means 63 judges, based on the eigenvalues of Hessian matrix, the likelihood of tubular structure for each local region. Further, the structure extraction means 63 detects, as a candidate point, the center point of a local region in which a tubular structure is identified.

In search for a tubular structure, it is desirable that plural sets of data (Gaussian pyramid) at different resolutions from each other are generated by performing resolution conversion on the data in the search range, and that search (scan) is repeated at different resolutions. In the aforementioned search method, if the diameter (width) of a local region is smaller than the diameter of a blood vessel, it is impossible to identify a tubular structure. However, it is possible to identify tubular structures of all sizes by performing search at different resolutions. Accordingly, it is possible to detect candidate points in all kinds of blood vessels including a large-diameter blood vessel, which is a main blood vessel, through a peripheral small-diameter blood vessel.

Next, the structure extraction means 63 connects, based on predetermined algorithm such as minimum spanning tree, the candidate points detected by search. Accordingly, a tree structure composed of candidate points and edges connecting the candidate points to each other, as illustrated in Figure 5, is constructed. Further, coordinate information about the detected plural candidate points and vector information representing the orientations of the edges are stored in the memory together with identifiers of the candidate points and identifiers of the edges.

Then, the structure extraction means 63 identifies the shape of the coronary artery for each detected candidate point in detail based on values (CT values) of voxels around the detected candidate points, respectively. Specifically, the structure extraction means 63 identifies the outline of the coronary artery (the outer wall of the blood vessel) in a cross section perpendicular to a path in the coronary artery. The shape is identified by using a known segmentation technique, such as Graph-Cuts. Further, GT values of the inside of the outline of the blood vessel are analyzed, and the inside of the outline of the blood vessel is divided into a soft plaque region (CT values are lower than a predetermined threshold value), a hard plaque region (CT values are higher than the predetermined threshold value), and a blood vessel lumen region (a region inside the outer wall of the blood vessel, excluding the soft plaque region and the hard plaque region).

Generally, CT values of soft plaque are lower than CT values of a normal lumen, and CT values of hard plaque are higher than CT values of the normal lumen. Further, it is known that signal values of plaque are not in the range of signal values of a normal lumen in MRI as well as CT. Here, this relationship of signal values is utilized to distinguish plaque regions from the lumen region. Specifically, the value of each of voxels constituting a cross section is compared with a predetermined threshold value to judge whether they represent plaque or lumen. Further, a region composed of voxels that have been judged as plaque is identified as a plaque region, and a region composed of voxels that have been judged as lumen is identified as a lumen region. Further, with respect to the plaque, judgment is made as to whether the plaque is soft plaque or hard plaque.

Further, the structure extraction means 63 extracts a tubular structure also from the three-dimensional intra-tubular-structure image V2. The three-dimensional intra-tubular-structure image V2 is composed of plural two-dimensional images obtained by performing tomography, along a path in the blood vessel, in a direction orthogonal to the path. The structure extraction means 63 detects the outline of the blood vessel (the outer wall of the blood vessel) in each of original two-dimensional tomographic images. The outline is detected by using a known segmentation technique, such as Graph-Cuts, in a manner similar to the three-dimensional image V1. Further, the blood vessel region is divided into soft plaque, hard plaque and a lumen region. Then, the center of gravity of the segmented blood vessel region is set as a center position of the blood vessel. The center positions of the blood vessel in the two-dimensional tomographic images are continuously connected to each other to obtain a path in the tubular structure. Alternatively, the center position of each of the two-dimensional tomographic images may be simply regarded as a path in a blood vessel.

If spectrum analysis on high frequency signals of an IVUS image or the like has been performed, and the three-dimensional intra-tubular-structure image V2 already has information about a segmented specific structure included in the three-dimensional intra-tubular-structure image V2, such as plaque region in a blood vessel, the structure extraction means 63 may directly use the information about the segmented specific structure. Then, the structure extraction means 63 may perform segmentation only on a structure that needs segmentation in the three-dimensional intra-tubular-structure image V2.

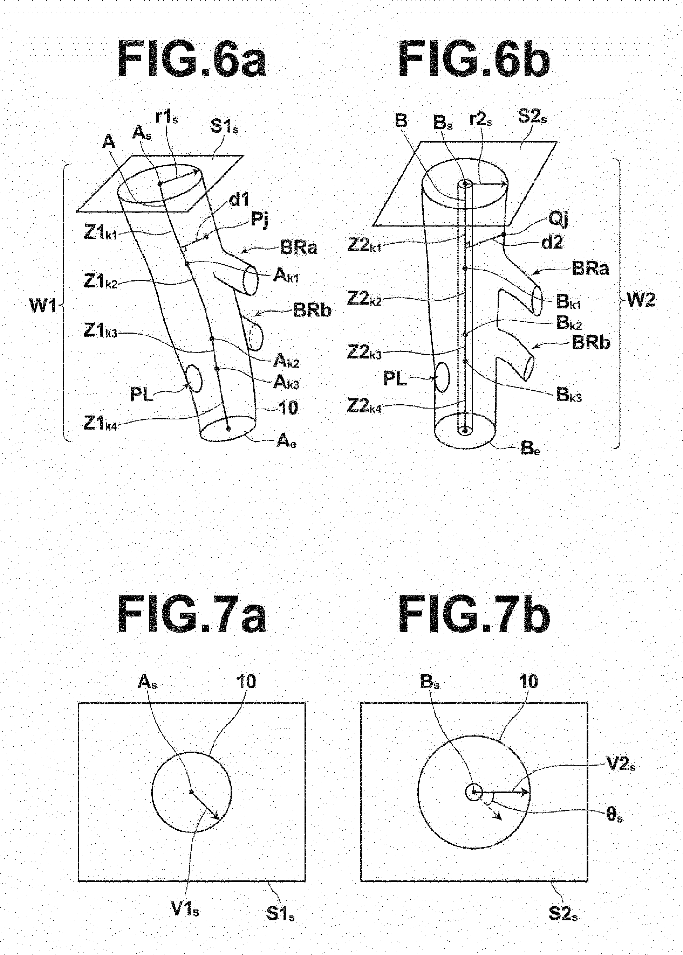

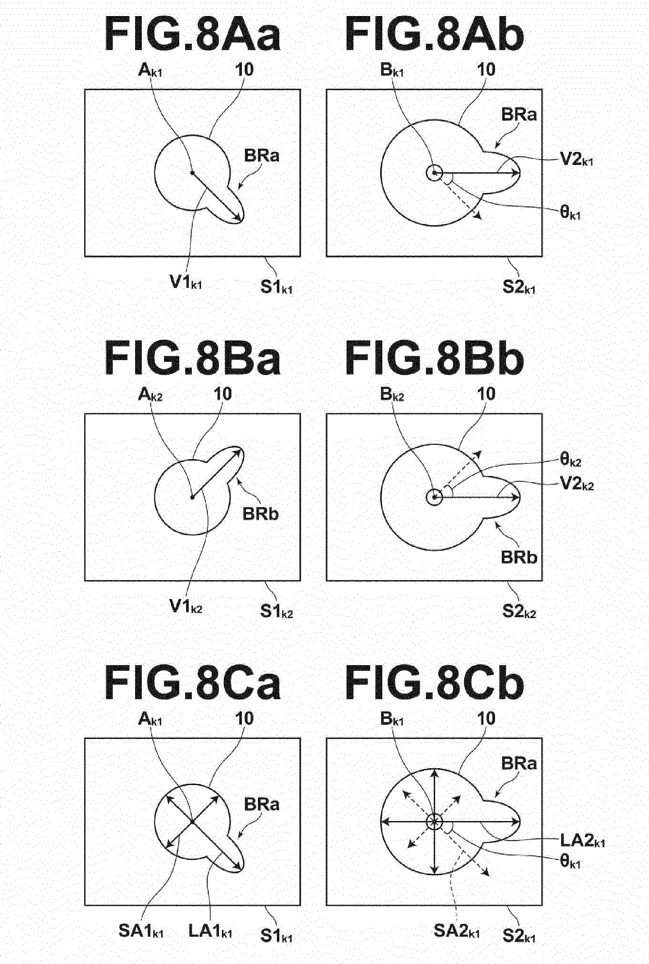

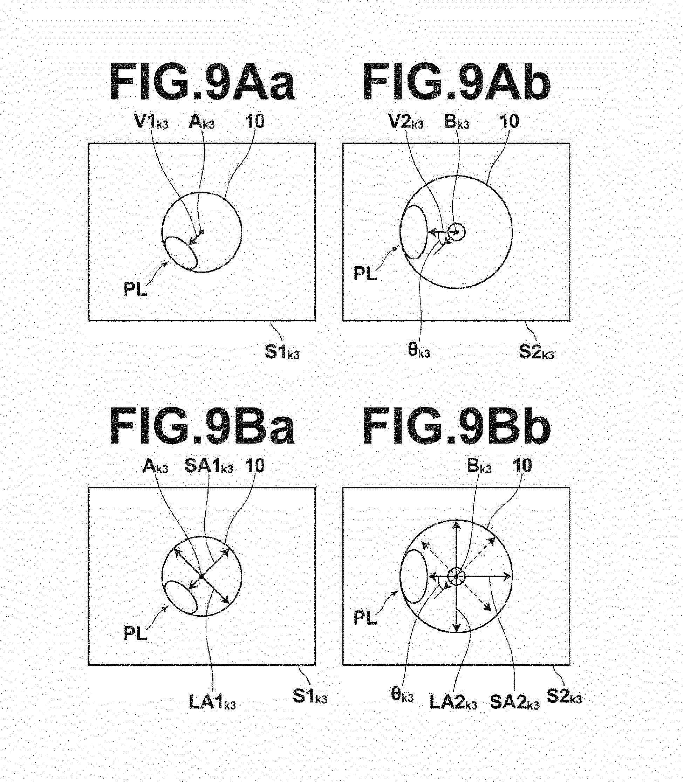

Further, the structure extraction means 63 in the present embodiment extracts the position of a branching portion or an uneven portion in the tubular structure. Figures 7a, 7b are diagrams for explaining a process of correlating the three-dimensional image and the three-dimensional intra-tubular-structure image with each other in circumferential directions (start point of the path). Figures 8Aa, 8Ab are tomographic image S1ₖ₁ of the three-dimensional image including branching portion BRa of the path and tomographic image S2ₖ₁ of the three-dimensional intra-tubular-structure image including the branching portion BRa of the path, respectively. Figures 8Ba, 8Bb are tomographic image S1ₖ₂ of the three-dimensional image including branching portion BRb of the path and tomographic image S2ₖ₂ of the three-dimensional intra-tubular-structure image including the branching portion BRb of the path, respectively. Figures 9Aa, 9Ab are tomographic image S1ₖ₃ of the three-dimensional image including plaque portion PL in the path and tomographic image S2ₖ₃ of the three-dimensional intra-tubular-structure image including the plaque portion PL in the path, respectively.

Specifically, as illustrated in Figures 8Aa, 8Ab, 8Ba and 8Bb, the structure extraction means 63 extracts tomographic images S1ₖ₁, S2ₖ₁ that include protruding shapes representing branching portions BRa on the outlines of the tubular structures from tomographic images constituting two three-dimensional images, namely, the three-dimensional image V1 and the three-dimensional intra-tubular-structure image V2 (three-dimensional image V1, and 3D- IVUS image V2), respectively. The structure extraction means 63 extracts the tomographic images S1ₖ₂, S2ₖ₂ that include protruding shapes representing branching portions BRb on the outlines of the tubular structures from tomographic images constituting the three-dimensional image V1 and the three-dimensional intra-tubular-structure image V2, respectively. In the following descriptions of this specification, tomographic image S1 (or S2) is a tomographic image orthogonal to path A (or B) in the three-dimensional image V1 (or three-dimensional intra-tubular-structure image V2). The structure extraction means 63 extracts, from tomographic images constituting the three-dimensional image V1 and tomographic images constituting the three-dimensional intra-tubular-structure image V2, tomographic images S1ₖ₃, S2ₖ₃, respectively. The tomographic images S1ₖ₃, S2ₖ₃ include hollow shapes on the outlines of the tubular structures, and the hollow shapes are uneven portions representing plaque PL.

As described above, in the present embodiment, each of the extraluminal (wall) region of the blood vessel and the lumen region of the blood vessel in the tomographic images is segmented. Further, an outline portion of each of the regions is detected in the tomographic image on which segmentation has been performed, and a long axis and a short axis are obtained. Further, a branching portion and an uneven portion in an anatomical structure are detected based on the ratio of the long axis to the short axis. Figures 8Ca, 8Cb are diagrams illustrating long axes LA1ₖ₁, LA2ₖ₁ and short axes SA1ₖ₁, SA2ₖ₁ at branching portions BRa in tomographic images S1ₖ₁, S2ₖ₁, of the three-dimensional image V1 and the three-dimensional intra-tubular-structure image V2, respectively. Figures 9Ba, 9Bb are diagrams illustrating long axes LA1ₖ₃, LA2ₖ₃ and short axes SA1ₖ₃, SA2ₖ₃ at plaque portions PL in tomographic images S1ₖ₃, S2ₖ₃ of the three-dimensional image V1 and the three-dimensional intra-tubular-structure image V2, respectively. As Figures 8Ca, 8Cb, 9Ba and 9Bb illustrate, a position at which the ratio of the long axis to the short axis of the extralumen (wall) of the blood vessel is large is detected as the position of the branching portion with respect to the longitudinal direction of the blood vessel, and the direction of the long axis at this time is detected as the direction of branching. Further, a position at which the lumen of the blood vessel is smaller than the extralumen of the blood vessel is detected as the position of the plaque portion with respect to the longitudinal direction of the blood vessel, and the direction of the short axis of the lumen of the bloodvessel at this time is detected as a direction in which plaque is concentrated on the cross section (a direction from the path toward the plaque) . As for the three-dimensional image V1, the extracted tree structure already includes information about branching (please refer to Figure 5).

The structure extraction means 63 may adopt various known methods as long as a characteristic portion of an anatomical structure, such as a branching portion or an uneven portion of the anatomical structure, can be extracted from the three-dimensional image V1 and the three-dimensional intra-tubular-structure image V2. For example, a user may manually select a tomographic image representing a branching portion of a blood vessel and a tomographic image representing a plaque portion in each of the three-dimensional image V1 and the three-dimensional intra-tubular-structure image V2, and input information specifying the selected tomographic images by using an input means. Then, the structure extraction means 63 may obtain the input information, and extract a tomographic image representing a branching portion of the blood vessel and a tomographic image representing a plaque region based on the input information.

Next, the correlating means 65 determines target ranges for correlating the three-dimensional image V1 and the 3D-IVUS image V2 along the paths A and B of the tubular structures in the three-dimensional image V1 and the 3D-IVUS image V2, respectively (step S04) . Figures 6a, 6b are image diagrams for explaining a method for correlating the three-dimensional image V1 and the three-dimensional intra-tubular-structure image V2 in the present embodiment. As illustrated in Figures 6a, 6b, the correlating means 65 determines, along path A, target range W1 from start point Aₛ to end point Aₑ in the three-dimensional image V1 obtained by CT. Further, the correlating means 65 determines, along path B, target range W2 from start point Bₛ to end point Be in the 3D-IVUS image V2.

Specifically, first, the correlating means 65 determines, as target range W2, the range from imaging start point Bₛ to imaging end point Be on the path in the tubular structure in which 3D-IVUS image V2 has been imaged. The target range W2 is a target range of correlation processing by the correlating means 65.

Further, the correlating means 65 generates a volume rendering image representing a coronary artery and the center line of the coronary artery based on the three-dimensional image V1. obtained by CT. Further, the correlating means 65 makes the display control means 68 display the volume rendering image on a display 7 to prompt a user to specify the target range W2 of correlation processing to be performed by the correlating means 65. The correlating means 65 detects specification of the position of the center line A of the coronary artery by manual operation of the input device 8 by the user at the display screen. Further, the correlating means 65 determines, based on the detected position, the target range W1 of correlation processing on the tubular structure 10 in the three-dimensional image V1.

Specifically, as illustrated in Figures 6a, 6b, the correlating means 65 prompts the user to click a start point and an end point of the target range W1 on the center line A of the coronary artery in the three-dimensional image V1, which corresponds to the target range W2 in the 3D-IVUS image V2, to specify the target range W1 on the center line A. When the correlating means 65 detects the click operation by the user for selecting start point Aₛ and end point Aₑ on the center line A of the coronary artery, the correlating means 65 determines, as the target range W1 in the three-dimensional image V1, the range from start point Aₛ and end point Aₑ along the center line A of the coronary artery.

The correlating means 65 correlates positions on the center line A in the extracted structure in the three-dimensional image V1 with positions on the path B in the three-dimensional intra-tubular-structure image V2 by making the specified two ranges W1 and W2 coincide with each other (step S05). Specifically, as illustrated in Figures 6a, 6b, the start point Aₛ and the end point Aₑ on the path A in the three-dimensional image V1 and the start point Bₛ and the end point Bₑ on the path B in the 3D-IVUS image V2 are correlated with each other in such a manner that positions along the paths in the determined two ranges W1 and W2 coincide with each other.

Here, the three-dimensional tubular-structure-image, such as the 3D-IVUS image, is a three-dimensional image reconstructed by stacking tomographic images one on another. The tomographic images are obtained by imaging while a catheter having an imaging device arranged at the leading end thereof is rotated at a constant rotation speed in the tubular structure and moved at a constant speed along the longitudinal direction of the tubular structure at the same time. However, in real imaging, the movement speed in the longitudinal direction and the rotation speed are not constant in some cases because of the complex morphology of the tubular structure. In such a case, a difference (error) in the movement speed in the longitudinal direction causes a difference in the length of the tubular structure represented in the three-dimensional intra-tubular-structure. Further, a difference in the rotation speed in the circumferential direction causes a difference in positions in the circumferential direction of the tubular structure represented in the three-dimensional intra-tubular-structure.

Therefore, in the present embodiment, the correlating means 65 performs correlation processing also at branching portion BR and protruding portion PL, which are characteristic portions of the tubular structure 10, in addition to the start point and the end point of the path to correct such an error. The correlating means 65 correlates positions of such characteristic portions along the paths A and B and angles in the circumferential directions with respect to axes Z on planes orthogonal to the paths A and B.

As the processing for correlating positions along the path of the tubular structure, the correlating means 65 in the present embodiment correlates point Aₖ₁ (or point Aₖ₂) on a path included in tomographic image S1ₖ₁ (or S1ₖ₂) including a branching portion in the tubular structure extracted by the structure extraction means 63 with point Bₖ₁ (or point Bₖ₂) on a path included in tomographic image S2ₖₗ (or S2ₖ₂) including the branching portion in the tubular structure extracted by the structure extraction means 63. Further, the correlating means 65 correlates point Aₖ₃ on a path included in tomographic image S1ₖ₃ including an uneven portion in the tubular structure extracted by the structure extraction means 63 with point Bₖ₃ on a path included in tomographic image S2ₖ₃ including the uneven portion in the tubular structure extracted by the structure extraction means 63. In other words, as illustrated in Figures 6a, 6b, the correlating means 65 correlates positions Aₖ₁, Aₖ₂, Aₖ₃ on the path in the extracted tubular structure in the three-dimensional image V1 and positions Bₖ₁, Bₖ₂, Bₖ₃ on the path in the three-dimensional intra-tubular-structure image V2 with each other.

Further, the correlating means 65 divides section Z1ₖ₁ from point Aₛ to point Aₖ₁ along the path A at predetermined intervals or at a predetermined number of division points. Further, the correlating means 65 divides section Z2ₖ₁ from point Bₛ to point Bₖ₁ along the path B at the predetermined intervals or at the predetermined number of division points. The correlating means 65 correlates the division points in section Z1ₖ₁ and the division points in section Z2ₖ₁ with each other.

Similarly, the correlating means 65 divides section Z1ₖ₂ from point Aₖ₁ to point Aₖ₂ along the path A at predetermined intervals or at a predetermined number of division points. Further, the correlating means 65 divides section Z2ₖ₂ from point Bₖ₁ to point Bₖ₂ along the path B at the predetermined intervals or at the predetermined number of division points. The correlating means 65 correlates the division points in section Z1ₖ₂ and the division points in section Z2ₖ₂ with each other. Similarly, the correlating means 65 divides section Z1ₖ₃ from point Aₖ₂ to point Aₖ₃ along the path A at predetermined intervals or at a predetermined number of division points. Further, the correlating means 65 divides section Z2ₖ₃ from point Bₖ₂ to point Bₖ₃ along the path B at the predetermined intervals or at the predetermined number of division points. The correlating means 65 correlates the division points in section Z1ₖ₃ and the division points in section Z2ₖ₃ with each other. Similarly, the correlating means 65 divides section Z1ₖ₄ from point Aₖ₃ to point Aₑ along the path A at predetermined intervals or at a predetermined number of division points. Further, the correlating means 65 divides section Z2ₖ₄ from point Bₖ₃ to point Bₑ along the path B at the predetermined intervals or at the predetermined number of division points. The correlating means 65 correlates the division points in section Z1ₖ₄ and the division points in section Z2ₖ₄ with each other.

Consequently, as illustrated in Figures 6a, 6b, points Aᵢ, Bᵢ (0≤i≤k), which correspond to each other, are set from start points Aₛ, Bₛ to end points Aₑ, Be on paths A and B, respectively. Here, point A₀ corresponds to point Aₛ, and point Aₖ corresponds to point Aₑ. Further, point B₀ corresponds to Bₛ, and point Bₖ corresponds to point Bₑ. Accordingly, positions on the path A (positions in the direction of Z-axis) in the range of start point Aₛ to end point Aₑ in the three-dimensional image V1 and positions on the path B (positions in the direction of Z-axis) in the range of start point Bₛ to end point Be in the three-dimensional intra-tubular-structure image V2 are correlated with each other.

Further, the correlating means 65 in the present embodiment correlates positions in the circumferential direction in the tubular structure in the three-dimensional image V1 and positions in the circumferential direction of the three-dimensional intra-tubular-structure image V2 with each other in such a manner that the position of the branching portion BR or the uneven portion PL in the tubular structure 10 in the three-dimensional image V1 coincides with the position of the branching portion BR or the uneven portion PL in the tubular structure 10 in the three-dimensional intra-tubular-structure image V2 (step S06).

In the correlation processing with respect to the circumferential direction of the tubular structure, the correlating means 65 calculates relative angle θₛ for making positions on a plane orthogonal to the path A in the three-dimensional image V1 coincide with positions on a plane orthogonal to the path B in the 3D-IVUS V2 at start point Aₛ in the three-dimensional image V1 and start point Bₛ in the 3D-IVUS image V2.

Specifically, as illustrated in Figures 7a, 7b, the correlating means 65 calculates rotation angle θₛ on plane XY by rotating tomographic image S2ₛ with respect to z-axis, as a rotational axis, while the scale of the tomographic image S2ₛ on plane XY is changed. The rotation angle θₛ, on plane XY is an angle at which the degree of overlapping between the outline of the tubular structure in the tomographic image S1ₛ and the outline of the tubular structure in the tomographic image S2ₛ is maximized. At the same time, the correlating means 65 obtains relative size Rs of the tomographic image S2ₛ with respect to the tomographic image S1ₛ. As the relative size Rs, the ratio of radius r2ₛ of the tubular structure in the tomographic image S2ₛ to radius r1ₛ of the tubular structure in the tomographic image S1ₛ when the degree of overlapping between the outline of the tubular structure in the tomographic image S1ₛ and the outline of the tubular structure in the tomographic image S2ₛ is maximized is obtained.

Further, such an angle in the circumferential direction with respect to the path, as a center, when the degree of overlapping between the outline of the tubular structure in the tomographic image S1 orthogonal to the path in the three-dimensional image V1 and the outline of the tubular structure in the tomographic image S2 in the 3D-IVUS image V2 is maximized is referred to as a relative angle of the 3D-IVUS image V2 with respect to the three-dimensional image v1 in some cases. In judgment on the degree of overlapping of outlines between two images, cost function for defining the degree of similarity between the outlines of the tubular structures in the two images is defined by using a known method. Further, the outline of the tubular structure in the tomographic image S1 and the outline of the tubular structure in the tomographic image S2 the angle of which is changed to plural angles are compared with each other by the function. The angle of the tomographic image S2 when the value of the cost function is minimized is judged as an angle at which the degree of overlapping of outlines between the two images is maximized.

Then, the correlating means 65 according to the present embodiment performs similar processing on each tomographic image including a branching portion and a tomographic image including a plaque portion. The correlating means 65 calculates relative angles θₖ₁, θₖ₂, and θₖ₃ of tomographic images S2ₕ₍ₕ₌ₖ₁, ₖ₂, ₖ₃₎ by rotating the tomographic image S2ₕ₍ₕ₌ₖ₁, ₖ₂, ₖ₃₎ with respect to Z-axis, as a rotational axis, while the scale of the tomographic image S2ₕ₍ₕ₌ₖ₁, ₖ₂, ₖ₃₎ on plane XY is changed. The relative angles θₖ₁, θₖ₂, and θₖ₃ are angles of the tomographic images S2ₕ₍ₕ₌ₖ₁, ₖ₂, ₖ₃₎ with respect to tomographic images Slₕ₍ₕ₌ₖ₁, ₖ₂, ₖ₃₎ when the degree of overlapping of the outline of the tubular structure in the tomographic image S1ₕ₍ₕ₌ₖ₁, ₖ₂, ₖ₃₎ and the outline of the tubular structure in the tomographic image S2ₕ₍ₕ₌ₖ₁, ₖ₂, ₖ₃₎ is maximized.

In Figures 7a, 7b, 8Aa, 8Ab, 8Ba, 8Bb, 9Aa and 9Ab, vectors Vlₕ₍ₕ₌ₖ₁, ₖ₂, ₖ₃₎ in tomographic image S1ₕ₍ₕ₌ₖ₁, ₖ₂, ₖ₃₎, and vectors V2ₕ₍ₕ₌ₖ₁, _{K2}, ₖ₃₎ in tomographic image S2ₕ₍ₕ₌ₖ₁, ₖ₂, ₖ₃₎ are illustrated. The vectors Vlₕ₍ₕ₌ₖ₁, ₖ₂, ₖ₃₎ and vectors V2ₕ₍ₕ₌ₖ₁, _{K2}, ₖ₃₎ start at points Aⱼ₍ⱼ₌ₖ₁, ₖ₂, ₖ₃₎ Bⱼ₍ⱼ₌ₖ₁, ₖ₂, ₖ₃₎ on paths included in the tomographic images S1ₕ₍ₕ₌ₖ₁, ₖ₂, ₖ₃₎ S2ₕ₍ₕ₌ₖ₁, ₖ₂, ₖ₃₎, and are oriented toward points representing the same position of the tubular structure region in the tomographic images S1ₕ₍ₕ₌ₖ₁, ₖ₂, ₖ₃₎ S2ₕ₍ₕ₌ₖ₁, ₖ₂, ₖ₃₎. An angle between the vector V1ₕ and the vector V2ₕ is relative angle θₕ of the tomographic image S2ₕ with respect to the tomographic image S1ₕ. Figures 7a, 7b, 8Aa, 8Ab, 8Ba, 8Bb, 9Aa and 9Ab illustrate that relative angle θₕ changes gradually at each position Aₕ₍ₕ₌ₖ₁, ₖ₂, ₖ₃₎, Bₕ₍ₕ₌ₖ₁, ₖ₂, ₖ₃₎ along paths A and B by a change in the rotation speed of the IVUS apparatus. Therefore, as illustrated in Figures 6a, 6b, the position of branching portion BRb of a blood vessel in the 3D-IVUS image V2 in the circumferential direction is different from the real position of the branching portion Brb in the blood vessel in the circumferential direction.

Further, the correlating means 65 determines a relative angle for each pair of points Aᵢ, Bᵢ (0≤i≤k) corresponding to each other, and which have been set along paths A and B. The relative angle for each pair is an angle on planes that include points Aᵢ, Bᵢ(0≤i≤k) and are orthogonal to the paths A and B, respectively. For example, in the present embodiment, the relative angle θᵢ is set for each pair of points Aᵢ, Bᵢ(0≤i≤k1) in sections Z1ₖ₁, Z2ₖ₁, in such a manner that the relative angle changes smoothly from relative angle θₛ, to relative angle θₖ₁. For example, the relative angle θ₁ is set in such a manner to increase (or decrease) stepwise from angle θₛ, to angle θₖ₁ Further, the relative angle θ₁ is set in such a manner that the relative angle changes smoothly from relative angle θₖ₁ to relative angle θₖ₂ for each pair of points Aᵢ, Bᵢ(k1<i≤k2) in sections Z1ₖ₂, Z2ₖ₂. Further, the relative angle θᵢ is set in such a manner that the relative angle changes smoothly from relative angle θₖ₂ to relative angle θₖ₃ for each pair of points Aᵢ, Bᵢ(k2<i≤k3) in sections Z1ₖ₃, Z2ₖ₃. Further, the relative angle θᵢ is set to relative angle θₖ₃ for each pair of points Ai, Bᵢ(k3<i≤k) in sections Z1ₖ₄, Z2ₖ₄**.**

As a method for calculating relative angle θ_{h(h=k1, k2, k3)} between the tomographic images S1ₕ and S2ₕ, it is not necessary to use the method for calculating, as the relative angle, an angle at which the degree of overlapping between the outline of the tubular structure in the tomographic image S1ₕ and the outline of the tubular structure in the tomographic image S2ₕ is maximized, as described above. Instead, as illustrated in Figures 8Ca, 8Cb, 9Ba and 9Bb, an angle at which the long axis LA1ₕ and the short axis SA1ₕ of tubular structure on tomographic images S**1**_{h (h=k1, k2, k3)} coincide with the long axis LA2ₕ and the short axis SA2ₕ of tubular structure on tomographic images S2_{h (h=k1, k2, k3)} may be calculated as the relative angle θ_{h(h=k1, k2, k3}). This method is adoptable to calculate the relative angle θ_{h(h=k1, k2, k3)}, because a branching direction in the image V1 and the eccentric direction of plaque in the image V1 coincide with a branching direction in the image V2 and the eccentric direction of plaque in the image V2 when the long axis and the short axis of a tubular structure in a tomographic image orthogonal to the path A coincide with the long axis and the short axis of a tubular structure in a tomographic image orthogonal to the path B at each pair of corresponding positions on the paths A and B.

The correlating means 65 correlates, based on the relative size Rs of the tomographic image S2s with respect to the tomographic image S1s and set relative angle θᵢ, each point on tomographic image S1ᵢ including point Aᵢ with a corresponding point on tomographic image S2ᵢ including point Bᵢ. The tomographic images S1ᵢ and S2ᵢ are orthogonal to Z axes (step S07). Further, the correlating means 65 repeats correlation processing on tomographic images S1ᵢ, S2ᵢ (0≤i≤k) orthogonal to the paths A, B in the ranges from start points Aₛ, Bₛ to end points Aₑ, Bₑ in the images V1 and V2. Accordingly, arbitrary voxels Pj (xⱼ, yⱼ, zⱼ) constituting the three-dimensional image V1 and voxels Qj (xⱼ, yⱼ, zⱼ) constituting the 3D-IVUS image V2 are correlated with each other.

When the coordinate of each point Pj (xⱼ, yⱼ, zⱼ) in tomographic image S1ᵢ is represented by angle θ in the circumferential direction with respect to center axis Z from axis X and distance d1 from the center axis Z to each point Pj in the coordinate system of the three-dimensional image V1, the coordinate of each point Qj(xⱼ,yⱼ, zⱼ) in tomographic image S2ᵢ, which corresponds to each point Pj, may be specified as a point at which an angle in circumferential direction with respect to center axis Z from X-axis is θ+θᵢ and distance d2 from the center axis Z to each point Qj is d1×Rs in the coordinate system of the 3D-IVUS image V2. In other words, it is possible to calculate the coordinate of each point Qj (xⱼ, yⱼ, zⱼ) of the tomographic image S2ᵢ corresponding to the coordinate of each point Pj (xⱼ, yⱼ, zⱼ) of the tomographic image S1ᵢ based on the relative size Rs and the set relative angle θᵢ.

The projection three-dimensional image generation means 66 generates a projection three-dimensional image by projecting an image of a specific structure included in a range in a three-dimensional intra-tubular-structure image into a corresponding range in a three-dimensional image correlated by the correlating means 65. The projection three-dimensional image generation means 66 generates projection three-dimensional image V3 by projecting, based on correlated positions, the voxel value of each voxel Qj (xⱼ, yⱼ, zⱼ) constituting the region of each structure of soft plaque, hard plaque and blood vessel lumen, which are separately identified structures of specific structures in the three-dimensional intra-tubular-structure image V2, onto corresponding positions Pj (xⱼ, yⱼ, zⱼ) in the three-dimensional image V1. Further, the projection three-dimensional image generation means 66 stores the projection three-dimensional image V3 in storage 5 (step S08).

The image generation means 67 generates reconstruction image Imag1 from the projection three-dimensional image V3 by using various kinds of reconstruction method, such as volume rendering, and stores the reconstruction image Imag1 in the storage 5. Here, the image generation means 67 generates a pseudo-three-dimensional image from the projection three-dimensional image V3 represented by using a volume rendering method, and stores the pseudo-three-dimensional image in the storage 5 (step S09).

The display control means 68 obtains various kinds of image based on a request by each means, and displays the obtained images on the display 7. In the present embodiment, the display control means 68 obtains reconstruction image Img1 reconstructed by the image generation means 67, and displays the reconstruction image Img1 on the display 7 (step S10).

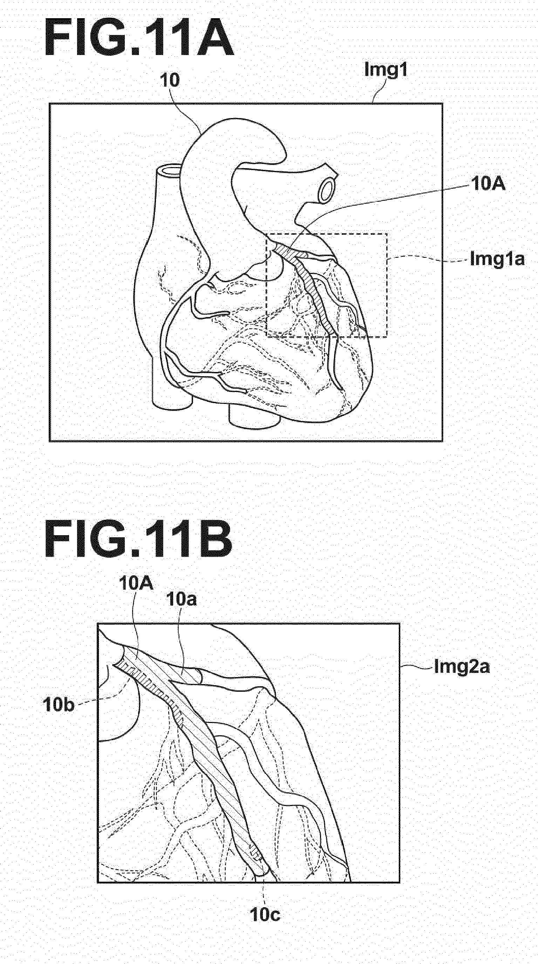

Figure 11A is a diagram illustrating an example of a displayed volume rendering image (reconstruction image) Img1, reconstructed from the projection three-dimensional image V3. As illustrated in Figure 11A, the volume rendering image Img1 represents the whole heart and a coronary artery 10 reconstructed from a three-dimensional image V1 obtained by CT. Further, the voxel value of each voxel constituting a specific structure region obtained from the 3D-IVUS image V2 has been projected into a part 10A of the coronary artery 10. Figure 11B is a diagram illustrating display of image Img2a, which is a magnified image of region Img1a in the volume rendering image Img1.

In the present embodiment, as illustrated in Figure 11B, the display control means 68 sets a different color and transparency (opacity) to voxels constituting each of a blood vessel lumen region 10a, a soft plaque region 10b and a hard plaque region 10c, which have been separately identified, with respect to the region 10A included in the correlated range of the blood vessel. Therefore, the display control means 68 can display each of the regions in an identifiable manner.

As described above, according to the first embodiment of the present invention, a tubular structure 10 of a subject is extracted from each of the three-dimensional image V1 representing the tubular structure and a three-dimensional intra-tubular-structure image V2. Further, arbitrary range W1 in the tubular structure 10 in the extracted three-dimensional image V1 and range W2, corresponding to the arbitrary range W1, in the tubular structure 10 in the three-dimensional intra-tubular-structure image are correlated with each other (the range W2 may be an arbitrary range, and the range W1 may be a corresponding range). Further, a projection three-dimensional image V3 is generated by projecting an image of a specific structure included in the range W2 in the three-dimensional intra-tubular-structure image V2 into the correlated range in the three-dimensional image. Accordingly, it is possible to generate the projection three-dimensional image in which the image of the specific structure in the three-dimensional intra-tubular-structure image is projected into the three-dimensional image in such a manner to conform to the morphology of the tubular structure in real space. Therefore, a user can easily recognize the image of the specific structure included in the three-dimensional intra-tubular-structure image based on the projection three-dimensional image.

Further, when the specific structure included in the three-dimensional intra-tubular-structure image V2 is displayed in a distinguishable manner as in the present embodiment, it is possible to easily recognize each segmented region in the tubular structure in the three-dimensional intra-tubular-structure image V2 in such a manner to be correlated with the morphology of the tubular structure in the three-dimensional image. Therefore, it is possible to improve the efficiency and the accuracy of diagnosis by doctors or the like. When the projection three-dimensional image is generated by projecting an image of only a specific structure or structures of structures included in the three-dimensional intra-tubular-structure image V2, and which are desired by the user, it is possible to flexibly generate a projection three-dimensional image V3 that can satisfy the user's demand.

The present invention is not limited to the present embodiment. The specific structure projected to obtain the projection three-dimensional image V3 may be any structure included in the three-dimensional intra-tubular-structure image V2. For example, the specific structure may be a tubular structure and/or a structure present in the tubular structure. For example, when the tubular structure is a blood vessel, a structure present in the blood vessel includes soft plaque and hard plaque. Further, a blood vessel lumen region, which is a blood vessel region excluding plaque regions such as soft plaque and hard plaque, may be regarded as a structure. Further, each tissue, such as fibrous tissue, fibrofatty tissue, calcified tissue, and necrotic tissue, which constitutes the plaque may be regarded as a structure in the blood vessel. Further, the voxel values of all voxels constituting the three-dimensional intra-tubular-structure image V2 may be projected to voxels at corresponding positions in the three-dimensional image V1 so that all of structures in the three-dimensional intra-tubular-structure image V2 are included in the projection three-dimensional image V3.

The specific structure projected to generate the projection three-dimensional image maybe one structure. Alternatively, plural structures may be projected. Further, as an image of a specific structure projected to generate the projection three-dimensional image, the voxel values of voxels constituting the specific structure in the three-dimensional intra-tubular-structure image V2 may be inserted at corresponding positions in the three-dimensional image V1. Alternatively, only information specifying the specific structure in the three-dimensional intra-tubular-structure image V2, such as the outline of the specific structure, may be projected to corresponding positions in the three-dimensional image V1.

The projection three-dimensional image V3 may be generated by directly inserting voxel values or the like in the three-dimensional image V1, itself. Alternatively, a new three-dimensional image V1' that has the same coordinate system as the three-dimensional image V1 may be generated, and a projection three-dimensional image V3 may generated by projecting an image onto the new three-dimensional image V1'. In the latter case, it is desirable that reconstruction images are generated from the generated projection three-dimensional image V3 and the three-dimensional image V1, respectively, and that the two reconstruction images are displayed in such a manner to be stacked one on the other.

Since the correlating means 65 correlates the the tubular structure 10 in the three-dimensional image V1 and the tubular structure 10 in the three-dimensional intra-tubular-structure image V2 based on the paths in the three-dimensional image V1 and the three-dimensional intra-tubular-structure image V2, respectively, it is possible to accurately correlate them with each other.

According to the first embodiment of the present invention, it is possible to generate a reconstruction image in which each voxel value in the three-dimensional intra-tubular-structure image is projected in such a manner to conform to the morphology of the tubular structure in real space. Therefore, doctors or the like can easily recognize the voxel value at each position of the tubular structure by displaying and observing the reconstruction image. Further, as in the first embodiment, when a highly accurate image of the inside of a blood vessel obtained in an intra-tubular-structure image is projected into a part of an image representing the morphology of the blood vessel obtained by CT or the like, and displayed, it is possible to easily recognize detailed information represented in the three-dimensional intra-tubular-structure image and influence in such a manner to be correlated with a position in the whole heart. Therefore, it is possible to improve the efficiency and the accuracy of diagnosis by doctors or the like.

Further, since the correlating means 65 in the first embodiment correlates positions in the extracted tubular structure in the three-dimensional image and positions on a path in the three-dimensional intra-tubular-structure image with each other in such a manner that the positions of branching portions Pra, Prb or uneven portions PL in tubular structures extracted by the structure extraction means 63 coincide with each other in the longitudinal direction of the tubular structure 10, it is possible to correct an error in the longitudinal direction of the tubular structure along the center line of the tubular structure. Further, it is possible to generate a projection three-dimensional image in which an image of a specific structure included in the three-dimensional intra-tubular-structure image represented in a coordinate system along the center line of the tubular structure has been projected more accurately in conformity with the morphology of the tubular structure in real space. Consequently, doctors or the like can intuitionally recognize both of the morphology of the tubular structure and a voxel value at each position of the tubular structure by observing the projection three-dimensional image without paying attention to an error caused by curvature or expansion/contraction of the tubular structure in the three-dimensional intra-tubular-structure image V2. Therefore, it is possible to improve the efficiency and the accuracy of diagnosis by doctors or the like.

Further, in the first embodiment, the correlating means 65 locates positions in the circumferential direction in the tubular structure in the three-dimensional image and positions in the circumferential direction in the tubular structure in the three-dimensional intra-tubular-structure image in such a manner that the position of a branching portion or an uneven portion in the tubular structure in the circumferential direction of the tubular structure in the three-dimensional image coincides with the position of the branching portion or the uneven portion in the tubular structure in the circumferential direction of the tubular structure in the three-dimensional intra-tubular-structure image. Therefore, it is possible to correct an error in the circumferential direction of the tubular structure with respect to the center line of the tubular structure, as a center axis. Further, it is possible to generate a projection three-dimensional image in which an image of a specific structure included in the three-dimensional intra-tubular-structure image represented in a coordinate system along the center line of the tubular structure has been projected more accurately in conformity with the morphology of the tubular structure in real space. Consequently, doctors or the like can intuitionally recognize both of the morphology of the tubular structure and a voxel value at each position of the tubular structure by observing the projection three-dimensional image without paying attention to an error in the circumferential direction of the tubular structure in the three-dimensional intra-tubular-structure image V2. Therefore, it is possible to improve the efficiency and the accuracy of diagnosis by doctors or the like.

The correlation processing at characteristic portions, as described above, may be performed on a characteristic portion other than the branching portion and the uneven portion as long as the same characteristic feature is identifiable in both of the three-dimensional intra-tubular-structure image V2 and the three-dimensional image V1. For example, a curvature portion in the tubular structure, the radius of the tubular structure, and the like may be used. In this case, the structure extraction means 63 may use various kinds of known method that can identify the same characteristic feature in both of the images V1, V2. For example, positions on paths in the two images V1, V2, the positions closest to the characteristic portions, may be correlated with each other. Alternatively, positions on the paths, the positions closest to the characteristic portions, may be correlated with each other in such a manner that the positions of the characteristic portions in the two images V1, V2 coincide with each other in circumferential directions with respect to the paths, as the center axes.

Next, a modified example of the first embodiment will be described. In the modified example, corresponding positions are correlated with each other in such a manner that a position in the three-dimensional image V1 and a position in the three-dimensional intra-tubular-structure image V2 at which the tubular structures have the same measured radii coincide with each other.

The modified example of the first embodiment differs from the first embodiment in that the structure extraction means 63 measures, at at least one position along the longitudinal direction of the tubular structure 10, the radius of the tubular structure 10 in each of the three-dimensional image V1 and the three-dimensional intra-tubular-structure image V2, and in that the correlating means 65 correlates positions in the tubular structure in the three-dimensional image V1 and positions on the path in the tubular structure in the three-dimensional intra-tubular-structure image V2 with each other in such a manner that a position in the three-dimensional image V1 and a position in the three-dimensional intra-tubular-structure image V2 at which the tubular structures have the same measured radii coincide with each other. Next, characteristic features of the modified example of the first embodiment will be described. Features different from the first embodiment will be mainly described, and descriptions of the same features will be omitted.

The structure extraction means 63 in the modified example of the first embodiment measures radii r1ₘ, r2ₘ (0<m≤ma) in plural tomographic images orthogonal to paths A, B in the tubular structures 10 in the three-dimensional image V1 and the three-dimensional intra-tubular-structure. The radii r1ₘ, r2ₘ (0<m≤ma) are measured at plural positions in ranges W1, W2 along the longitudinal directions of the paths A, B in the tubular structures 10. Further, the structure extraction means 63 stores plural radii r1ₘ, r2ₘ (0<m≤ma), measured at points Aₘ, Bₘ on the paths included in the tomographic images, in a memory.

Further, the correlating means 65 correlates points Aₘ, Bₘ, of the plural points on paths A, B. The tubular structures have the same measured radii r1ₘ, r2ₘ (0<m≤ma) at points Aₘ, B_{m'}. Here, the expression "have the same measured radii means that the relative size of each radius r1ₘ with respect to radius r1ₛ at start point Aₛ on the path A is the same as the relative size of each radius r2ₘ with respect to radius r2ₛ at start point Bₛ on the path B.

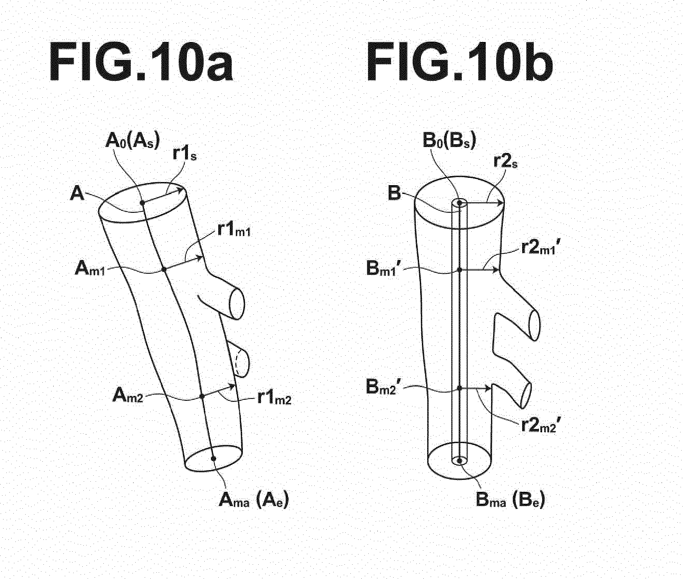

Figures 10a, 10b are diagrams for explaining positioning process in the modified example of the first embodiment. As illustrated in Figures 10a, 10b, when radii r1ₘ₁, r2_{m1'} coincide with each other, point Aₘ₁ on the path A on the tomographic image at which the radius r1ₘ₁ was measured is correlated with point B_{m1'} on the path B on the tomographic image at which the radius r2_{m1'} was measured. Similarly, when radii r1ₘ₂, r2_{m2'} coincide with each other, point Aₘ₂ on the path A on the tomographic image at which the radius r1ₘ₂ was measured is correlated with point B_{m2'} on the path B on the tomographic image at which the radius r2_{m2'} was measured. Here, it is assumed that 0<m1<m1'<m2'<m2<ma. Specifically, points Aₘ, B_{m'} on paths A, B at which radii coincide with each other are correlated with each other along the paths A, B. In Figures 10a, 10b, two points in either one of the tomographic images are correlated with two points in the other one of the tomographic images. However, it is not necessary that the number of the points is two. The number of positions to be correlated in each image may be any number greater than one as long as the tubular structure has the same radius at the position or positions.

Further, the correlating means 65 sets division points for dividing, at predetermined intervals or at a predetermined number of division points, a section from start point A₀(Aₛ) to point A1ₘ₁ on path A in the tubular structure 10 and a section from start point B₀(Bₛ) to point B1_{m1'} on path B in the tubular structure 10. Further, the correlating means 65 correlates the division points in the two sections with each other. Similarly, the correlating means 65 sets division points for dividing, at predetermined intervals or at a predetermined number of division points, a section from start point Aₘ₁ to point Aₘ₂ on path A in the tubular structure 10 and a section from start point B_{m1'} to point B1_{m2'} on path B in the tubular structure 10. Further, the correlating means 65 correlates the division points in the two sections with each other. Similarly, the correlating means 65 sets division points for dividing, at predetermined intervals or at a predetermined number of division points, a section from start point A_{m2'} to point Aₘₐ on path A in the tubular structure 10 and a section from start point B_{m2'} to point B1ₘₐ on path B in the tubular structure 10. Further, the correlating means 65 correlates the division points in the two sections with each other. Further, the correlating means 65 stores the correlated division points in the memory.

As illustrated in Figure 10a, 10b, points Aᵢ, Bᵢ (0≤i≤ma), which correspond to each other, are set along paths A, B from start points Aₛ, Bₛ to end points Aₑ, Bₑ. Point A₀ corresponds to point Aₛ, and point Aₘₐ corresponds to point Aₑ. Point B₀ corresponds to point Bₛ, and point Bₘₐ corresponds to point Bₑ. Accordingly, positions (positions in the direction of Z axis) of points on path A in the range from start point Aₛ to end point Aₑ in the image V1 are correlated with positions (positions in the direction of Z axis) of points on path B in the range from start point Bₛ to end point Be in the image V2.

According to the modified example of the first embodiment, the three-dimensional image and the three-dimensional intra-tubular-structure image are positioned along the longitudinal direction of the tubular structure in such a manner that a position in the three-dimensional image and a position in the three-dimensional intra-tubular-structure image at which the tubular structures have the same radii coincide with each other. Therefore, it is possible to correct an error in position of the tubular structure in the longitudinal direction of the tubular structure along the center line of the tubular structure. Further, it is possible to generate a projection three-dimensional image in which an image of a specific structure included in the three-dimensional intra-tubular-structure image represented in a coordinate system along the center line of the tubular structure has been projected more accurately in conformity with the morphology of the tubular structure in real space. Consequently, doctors or the like can intuitionally recognize both of the morphology of the tubular structure and a voxel value at each position of the tubular structure by observing the projection three-dimensional image without paying attention to expansion/contraction in the longitudinal direction of the tubular structure in the three-dimensional intra-tubular-structure image V2. Therefore, it is possible to improve the efficiency and the accuracy of diagnosis by doctors or the like.

The blood vessel, such as the coronary artery, becomes narrower as the position of the blood vessel is closer to the far end of the blood vessel. Therefore, it is possible to effectively correct an error in position of the tubular structure in the longitudinal direction along the center line of the tubular structure by positioning the blood vessels in such a manner that positions at which the blood vessels have the same radius coincide with each other.

Further, the tubular structures may be positioned along the paths by using various kinds of index based on the thickness (width, diameter or the like) of the blood vessel as well as the radius of the blood vessel. For example, the tubular structures may be positioned based on the area of the cross section of the blood vessel.

Further, positions in the tubular structure in the three-dimensional image V1 and positions in the tubular structure in the three-dimensional intra-tubular-structure image V2 may be correlated with each other along the longitudinal directions of the paths A, B in the tubular structures or in the circumferential directions by using various kinds of method as long as the method correlates the positions in such a manner that the positions of characteristic portions of the tubular structures in the images V1 and V2 coincide with each other in the longitudinal directions or in the circumferential directions.

In the descriptions of each of the embodiments, a 3D-IVUS image was used as an example. However, it is apparent for those skilled in the art that the embodiments are applicable as long as the image is a three-dimensional intra-tubular-structure image that has been generated by stacking intra-tubular-structure images one on another in a similar manner to the 3D-IVUS image. The embodiments of the present invention are applicable to a three-dimensional image, such as a VH (virtual histology)-IVUS image generated by stacking, one on another, IVUS images including information about a segmentation result obtained by performing various kinds of analysis on ultrasonic RF signals. Further, the embodiments of the present invention are applicable to a three-dimensional image generated by stacking OCT images one on another.

Further, when a specific structure included in the three-dimensional intra-tubular-structure image V2 other than the tubular structure has a tubular shape that can be correlated with the three-dimensional image. V1, a three-dimensional image V2' representing the tubular-shaped specific structure extracted from the three-dimensional intra-tubular-structure image V2 may be obtained instead of the three-dimensional intra-tubular-structure image V2. Further, a predetermined range in the obtained three-dimensional image V2' and a predetermined range in the three-dimensional image V1 may be correlated to project the specific structure included in the three-dimensional image V2' into the three-dimensional image V1.

Further, in each of the embodiments, the path in the tubular structure may be set by using a computer. Alternatively, the path may be set by a manual operation by a user. Specifically, arbitrary plural points are set in the tubular structure, and the set plural points are smoothly connected to each other by using algorithm, such as spline interpolation. Further, the connected curve may be used as the path in the tubular structure.

In each of the embodiments, a case of causing one WS for diagnosis to function as an apparatus for reconstructing an image of the inside of a tubular structure by installing a program for reconstructing an image of the inside of a tubular structure in the WS for diagnosis was described. Alternatively, the program for reconstructing an image of the inside of a tubular structure may be installed distributedly in plural computers to cause the plural computers to function as the apparatus for reconstructing an image of the inside of the tubular structure.

## Claims

1. An apparatus for reconstructing an image of the inside of a tubular structure, the apparatus comprising:
a three-dimensional image obtainment means (61) that obtains a three-dimensional image (V1) representing a tubular structure (10) of a subject;
a three-dimensional intra-tubular-structure image obtainment means (62) that obtains a three-dimensional intra-tubular-structure image (V2), which is a three-dimensional image of the inside of the tubular structure (10) that has been generated from a plurality of tomographic images of the tubular structure (10) obtained by performing tomography on the tubular structure (10) a plurality of times from the inside of the tubular structure (10) along a path in the tubular structure (10);
a structure extraction means (63) that extracts the tubular structure (10) from each of the obtained three-dimensional image (V1) and the obtained three-dimensional intra-tubular-structure image (V2);
a correlating means (65) that correlates an arbitrary range (W1, W2) in one of the tubular structure (10) extracted from the three-dimensional image (V1) and the tubular structure (10) extracted from the three-dimensional intra-tubular-structure image (V2) with a corresponding range (W1, W2) in the other one of the tubular structures (10); and
a projection three-dimensional image generation means (66) that generates a projection three-dimensional image (V3) by projecting an image of a specific structure included in the range (W2) in the three-dimensional intra-tubular-structure image (V2) into the correlated range (W1) in the three-dimensional image (V1).

2. An apparatus for reconstructing an image of the inside of a tubular structure, as defined in Claim 1, wherein the correlating means (65) correlates the arbitrary range (W1, W2) in one of the tubular structures (10) with the corresponding range (W1, W2) in the other one of the tubular structures (10) based on a path in the tubular structure (10) in the three-dimensional image (V1) and the path in the tubular structure (10) in the three-dimensional intra-tubular-structure image (V2).

3. An apparatus for reconstructing an image of the inside of a tubular structure, as defined in Claim 1 or 2, wherein the specific structure is the tubular structure (10) and/or a structure present in the tubular structure (10).

4. An apparatus for reconstructing an image of the inside of a tubular structure, as defined in any one of Claims 1 to 3, wherein the structure extraction means (63) further extracts the position of a branching portion or an uneven portion in the tubular structure (10) from each of the three-dimensional image (V1) and the three-dimensional intra-tubular-structure image (V2), and
wherein the correlating means (65) correlates the arbitrary range (W1, W2) in one of the tubular structures (10) with the corresponding range (W1, W2) in the other one of the tubular structures (10) in such a manner that the positions of the branching portions or the uneven portions extracted from the three-dimensional image (V1) and the three-dimensional intra-tubular-structure image (V2) coincide with each other in longitudinal directions of the tubular structures (10).

5. An apparatus for reconstructing an image of the inside of a tubular structure, as defined in Claim 4, wherein the correlating means (65) correlates positions in the tubular structure (10) in a circumferential direction of the tubular structure (10) in the three-dimensional image (V1) and positions in the tubular structure (10) in a circumferential direction of the tubular structure (10) in the three-dimensional intra-tubular-structure image (V2) with each other in such a manner that the positions of the branching portions or the uneven portions extracted from the three-dimensional image (V1) and the three-dimensional intra-tubular-structure image (V2) coincide with each other in the circumferential directions of the tubular structures (10).

6. An apparatus for reconstructing an image of the inside of a tubular structure, as defined in any one of Claims 1 to 3, wherein the structure extraction means (63) measures a radius of the tubular structure (10) at at least one position along a longitudinal direction of the tubular structure (10) in each of the three-dimensional image (V1) and the three-dimensional intra-tubular-structure image (V2), and
wherein the correlating means (65) correlates the arbitrary range (W1, W2) in one of the tubular structures (10) and the corresponding range (W1, W2) in the other one of the tubular structures (10) with each other in such a manner that a position in the three-dimensional image (V1) and a position in the three-dimensional intra-tubular-structure image (V2) at which the tubular structures (10) have the same measured radii coincide with each other.

7. An apparatus for reconstructing an image of the inside of a tubular structure, as defined in any one of Claims 1 to 6, wherein the three-dimensional intra-tubular-structure image obtainment means (62) obtains a three-dimensional intravascular ultrasonic image.

8. An apparatus for reconstructing an image of the inside of a tubular structure, as defined in any one of Claims 1 to 6, wherein the three-dimensional intra-tubular-structure image obtainment means (62) obtains a three-dimensional optical coherence tomography image.

9. An apparatus for reconstructing an image of the inside of a tubular structure, as defined in any one of Claims 1 to 8, wherein the tubular structure (10) is a blood vessel.

10. A method for reconstructing an image of the inside of a tubular structure, the method comprising the steps of:
obtaining a three-dimensional image (V1) representing a tubular structure (10) of a subject;
obtaining a three-dimensional intra-tubular-structure image (V2), which is a three-dimensional image of the inside of the tubular structure (10) that has been generated from a plurality of tomographic images of the tubular structure (10) obtained by performing tomography on the tubular structure (10) a plurality of times from the inside of the tubular structure (10) along a path in the tubular structure (10);
extracting the tubular structure (10) from each of the obtained three-dimensional image (V1) and the obtained three-dimensional intra-tubular-structure image (V2);
correlating an arbitrary range (W1, W2) in one of the tubular structure (10) extracted from the three-dimensional image (V1) and the tubular structure (10) extracted from the three-dimensional intra-tubular-structure image (V2) with a corresponding range (W1, W2) in the other one of the tubular structures (10); and
generating a projection three-dimensional image (V3) by projecting an image of a specific structure included in the range (W2) in the three-dimensional intra-tubular-structure image (V2) into the correlated range (W1) in the three-dimensional image (V1).

11. A medium storing therein a program for reconstructing an image of the inside of a tubular structure, the program causing a computer to function as:
a three-dimensional image obtainment means (61) that obtains a three-dimensional image (V1) representing a tubular structure (10) of a subject;
a three-dimensional intra-tubular-structure image obtainment means (62) that obtains a three-dimensional intra-tubular-structure image (V2), which is a three-dimensional image of the inside of the tubular structure (10) that has been generated from a plurality of tomographic images of the tubular structure (10) obtained by performing tomography on the tubular structure (10) a plurality of times from the inside of the tubular structure (10) along a path in the tubular structure (10);
a structure extraction means (63) that extracts the tubular structure (10) from each of the obtained three-dimensional image (V1) and the obtained three-dimensional intra-tubular-structure image (V2);
a correlating means (65) that correlates an arbitrary range (W1, W2) in one of the tubular structure (10) extracted from the three-dimensional image (V1) and the tubular structure (10) extracted from the three-dimensional intra-tubular-structure image (V2) with a corresponding range (W1, W2) in the other one of the tubular structures (10); and
a projection three-dimensional image generation means (66) that generates a projection three-dimensional image (V3) by projecting an image of a specific structure included in the range (W2) in the three-dimensional intra-tubular-structure image (V2) into the correlated range (W1) in the three-dimensional image (V1).
